# EUROPÄISCHE PATENTSCHRIFT

(11) **EP 3 261 228 B1**
(45) Veröffentlichungstag und Bekanntmachung des Hinweises auf die Patenterteilung: **09.08.2023**
(21) Anmeldenummer: 17175061.5
(22) Anmeldetag: 08.06.2017
(51) Int. Cl.: H02K 5/08, H02K 3/44, H02K 15/12

(54) **ELEKTRISCHE MASCHINE FÜR EIN HAUSHALTSGERÄT MIT ZUMINDEST TEILWEISE UMSPRITZTEN STATOR, PUMPE, HAUSHALTSGERÄT SOWIE VERFAHREN**
ELECTRIC MACHINE FOR A HOUSEHOLD APPLIANCE COMPRISING AT LEAST PARTIALLY OVERMOULDED STATOR, PUMP, HOUSEHOLD APPLIANCE AND METHOD
MACHINE ÉLECTRIQUE POUR UN APPAREIL MÉNAGER COMPRENANT AU MOINS UN STATOR PARTIELLEMENT SURMOULÉ, POMPE, APPAREIL MÉNAGER ET PROCÉDÉ

(30) Priorität: 22.06.2016 DE 102016211127
(43) Veröffentlichungstag der Anmeldung: 27.12.2017
(73) Patentinhaber: BSH Hausgeräte GmbH, 81739 München (DE)
(72) Erfinder: Böttger, Torsten, 01445 Radebeul (DE); Hahn, Kevin, 14548 Schwielowsee (DE); Römer, Raymond, 10965 Berlin (DE); Walter, Axel, 13599 Berlin (DE)

(56) Entgegenhaltungen:
- EP-A1- 0 807 644
- WO-A1-2013/035349
- WO-A2-2015/043814
- DE-A1- 2 461 695
- US-A1- 2004 119 345
- US-A1- 2014 271 280

## Beschreibung

Die vorliegende Erfindung betrifft eine elektrische Maschine für ein Haushaltsgerät, welche als Synchronmaschine ausgebildet ist, mit einem Stator, welcher einen Statorkörper und eine Wicklung aufweist, wobei der Stator zumindest bereichsweise mit einem Schutzmaterial umspritzt ist, und mit einem Rotor, welcher relativ zu dem Stator drehbar ist und welcher zumindest einen Permanentmagneten aufweist. Darüber hinaus betrifft die vorliegende Erfindung eine Pumpe für ein Haushaltsgerät. Des Weiteren betrifft die vorliegende Erfindung ein Haushaltsgerät. Schließlich betrifft die vorliegende Erfindung ein Verfahren zum Herstellen einer elektrischen Maschine.

Aus dem Stand der Technik sind elektrische Maschinen bekannt, welche in Haushaltsgeräten eingesetzt werden. Beispielsweise können die elektrischen Maschinen als Antriebe für Pumpen verwendet werden, welche in Haushaltsgeräten, wie beispielsweise Waschmaschinen oder in Geschirrspülmaschinen eingesetzt werden. Hierzu ist es aus dem Stand der Technik bekannt, elektrische Maschinen zu verwenden, welche als permanenterregte Synchronmaschinen ausgebildet sind. Diese Synchronmaschinen weisen einen Stator auf, welcher wiederum eine Wicklung umfasst. Zudem weisen die permanenterregten Synchronmaschinen einen Rotor auf, welcher einen oder mehrere Permanentmagneten umfasst.

Die Wirkungsgrade dieser elektrischen Maschinen und ihre Lebensdauern können im Allgemeinen auf ein sehr hohes Niveau ausgelegt werden. Hierbei spielen aber verschiedene Einflussgrößen, wie beispielsweise der Bauraum, die Drehzahl, der Verschleiß und/oder die Erwärmung eine entscheidende Rolle. Besonders problematisch ist in einigen Fällen die Wärmeabfuhr im Betreib der elektrischen Maschine. Dies ist insbesondere bei elektrischen Maschinen mit kleinen Baugrößen, welche beispielsweise in Pumpen eingesetzt werden, der Fall. Um der erhöhten Erwärmung entgegenzuwirken, ist es aus dem Stand der Technik bekannt, dass der Stator der elektrischen Maschine zumindest teilweise mit einem Schutzmaterial umspritzt ist. Durch die Umspritzung bzw. durch das Schutzmaterial wird die Erwärmung innerhalb der elektrischen Maschine besser, also homogener und schneller, verteilt und kann somit auch schneller an die Umgebung abgegeben werden.

Hierzu beschreibt die CN 103516090 A eine elektrische Maschine für ein Haushaltsgerät, insbesondere für eine Waschmaschine, welche als Synchronmaschine ausgebildet ist. Die elektrische Maschine weist einen Stator mit einer einphasigen Wicklung auf. Darüber hinaus ist der Stator der elektrischen Maschine mit einem Schutzmaterial, beispielsweise einem Kunstharzmaterial, zumindest bereichsweise beschichtet.

Aus der Druckschrift DE 11 2006 000 010 T5 ist ein elektrische Maschine für eine Waschmaschine bekannt in Form eines Direktantriebsmotors für die Wäschetrommel bekannt. Der Stator dieses Antriebsmotors weist einen Statorkörper und eine Wicklung aufweist, der bereichsweise mit einem Schutzmaterial aus einem einkapselnden isolierenden Harz umspritzt ist.

Die Druckschrift EP 2 991 206 A1 zeigt einen Pumpenantriebsmotor, bei dem die Wicklung des Stators dreiphasig ausgeführt ist. Der Stator dieses Antriebs ist nicht umspritzt.Aus der WO 2013/035349 A1 ist eine elektrische Maschine mit einem Stator und einem Rotor bekannt. Dabei ist die Wicklung der elektrischen Maschine dreiphasig ausgebildet. Ferner ist es vorgesehen, dass der Stator und eine Leiterplatte der elektrischen Maschine umspritzt sind.

Des Weiteren beschreibt die US 2014/0271280 A1 einen elektrischen Motor für eine Pumpe, welcher einen Stator und einen Rotor aufweist. Die Wicklung des Stators, welche dreiphasig ausgebildet ist, kann umspritzt sein. Ferner können eine magnetische Statorkomponente und die Wicklungen des Stators jeweils umspritzt sein.

Eine mit einem Harz umspritzte elektrische Maschine ist aus der US 2004/119345 A1 bekannt.

Schließlich offenbart die DE 24 61 695A1 ein Verfahren zur Herstellung eines Motors.

Es ist Aufgabe der vorliegenden Erfindung, eine Lösung aufzuzeigen, wie eine elektrische Maschine für ein Haushaltsgerät der eingangs genannten Art effizienter betrieben werden kann.

Diese Aufgabe wird durch eine elektrische Maschine, durch eine Pumpe, durch ein Haushaltsgerät sowie durch ein Verfahren mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform ist eine elektrische Maschine für ein Haushaltsgerät als Synchronmaschine ausgebildet. Die elektrische Maschine weist insbesondere einen Stator auf, welcher einen Statorkörper und eine Wicklung aufweist. Dabei ist der Stator bevorzugt zumindest bereichsweise mit einem Schutzmaterial umspritzt. Darüber hinaus weist die elektrische Maschine insbesondere einen Rotor auf, welcher relativ zu dem Stator drehbar ist und welcher bevorzugt zumindest einen Permanentmagneten aufweist. Des Weiteren ist die Wicklung des Stators bevorzugt mehrphasig ausgebildet. Das Schutzmaterial umfasst Fasern und ein Harz.

Eine erfindungsgemäße elektrische Maschine für ein Haushaltsgerät ist als Synchronmaschine ausgebildet. Die elektrische Maschine weist einen Stator auf, welcher einen Statorkörper und eine Wicklung aufweist, wobei der Stator zumindest bereichsweise mit einem Schutzmaterial umspritzt ist. Darüber hinaus weist die elektrische Maschine einen Rotor auf, welcher relativ zu dem Stator drehbar ist und welcher zumindest einen Permanentmagneten aufweist. Darüber hinaus ist die Wicklung des Stators mehrphasig ausgebildet. Dabei umfasst das Schutzmaterial Fasern und ein Harz.

Die elektrische Maschine kann in einem Haushaltsgerät eingesetzt werden. Beispielsweise kann die elektrische Maschine in einem Haushaltsgerät zur Pflege von Wäschestücken, beispielsweise einer Waschmaschine, einem Wäschetrockner oder einem Waschtrockner, verwendet werden. Des Weiteren kann die elektrische Maschine in einer Spülmaschine und insbesondere in einer Geschirrspülmaschine verwendet werden. Beispielsweise kann die elektrische Maschine als Antrieb in einer Pumpe eingesetzt werden. Die elektrische Maschine ist als permanenterregte Synchronmaschine ausgebildet. Die elektrische Maschine umfasst den Stator, welcher den Statorkörper umfasst. Es kann auch vorgesehen sein, dass der Stator mehrere Statorkörper umfasst. Der Statorkörper kann beispielsweise aus einem Blechpaket von laminierten Einzelblechen gebildet sein. Des Weiteren weist der Stator die Wicklung auf, welche an dem Statorkörper angeordnet sein kann. Der Rotor der elektrischen Maschine umfasst zumindest einen Permanentmagneten. Bevorzugt umfasst der Rotor eine Mehrzahl von Permanentmagneten, die beispielsweise in Umfangsrichtung des Rotors nebeneinander angeordnet sein können. Der Rotor ist insbesondere zumindest bereichsweise innerhalb des Stators angeordnet und drehbar zu dem Stator gelagert. Dabei ist es ferner vorgesehen, dass der Stator bereichsweise oder vollständig mit einem Schutzmaterial umspritzt ist. Mit anderen Worten ist an dem Stator bereichsweise ein Schutzmaterial angeordnet. Dieses Schutzmaterial kann dazu dienen, den Stator oder die Bereiche des Stators, an welchen das Schutzmaterial angeordnet ist, vor äußeren Umwelteinflüssen zu schützen. Ferner kann das Schutzmaterial dazu dienen, Wärme von dem Stator abzuführen oder Wärme homogener zu verteilen.

Gemäß einem wesentlichen Aspekt der vorliegenden Erfindung ist es vorgesehen, dass die Wicklung des Stators mehrphasig ausgebildet ist. Somit kann die gewünschte Drehrichtung des Antriebs bzw. des Rotors drehzahlvariabel realisiert werden. Insbesondere kann die elektrische Maschine als dreiphasige Synchronmaschine mit Permanenterregung ausgebildet sein. Die elektrische Maschine kann eine dreiphasige permanenterregte Synchronmaschine sein (permanent-magnet synchronous motor). So ist die elektrische Maschine als sogenannter bürstenloser Synchronmotor ausgebildet. Die elektrische Maschine weist also keinen Kommutator bzw. kein Bürstensystem zur Bestromung des Rotors auf. Dabei wird durch die mehrphasige Wicklung des Stators ein sich drehendes magnetisches Feld erzeugt, durch welches der Rotor, welcher die Permanentmagnete aufweist, gedreht wird. Durch die dreiphasige Ausgestaltung der Wicklung wird es möglich, die Drehzahl des Motors präzise zu steuern und die Drehrichtung vorzugeben. Hierzu kann die elektrische Maschine bzw. die Wicklung mit einem entsprechenden Frequenzumrichter angesteuert werden. Ferner zeichnet sich die elektrische Maschine mit der mehrphasigen Wicklung im Stator durch eine hohe Dynamik und eine hohe Effizienz aus. Des Weiteren wird es ermöglicht, dass mit der mehrphasigen elektrischen Maschine hohe Drehmomente bereitgestellt werden. Somit kann ein effizienter Betrieb der elektrischen Maschine bei Verwendung in dem Haushaltsgerät ermöglicht werden.

Die Wicklung weist Spulen auf, wobei die Spulen der Wicklung jeweils auf einem elektrisch isolierenden Spulenträger angeordnet und die jeweiligen Spulen mit dem Schutzmaterial umspritzt sind. Die Spulenträger können beispielsweise aus einem elektrisch isolierenden Kunststoff gebildet sein. Dieser Spulenträger ist insbesondere zwischen den jeweiligen Zähnen und den Spulen der Wicklung angeordnet. Beispielsweise können die Spulen zunächst auf den Spulenträger aufgebracht werden und anschließend kann der Spulenträger einschließlich der Spule auf einen Zahn aufgeschoben werden. Dabei ist die Spule vollständig mit dem Schutzmaterial umspritzt. Ferner wird die Spule zunächst auf den Spulenträger aufgebracht und anschließend der Spulenträger zusammen mit der Spule umspritzt. Somit können die Spulen zuverlässig elektrisch isoliert werden. Zudem weisen die Spulen dadurch einen verbesserten Halt oder Sitz auf dem Statorträger bzw. Statorpaket auf.

Bevorzugt weist der Statorkörper eine Mehrzahl von Zähnen auf, an welchen jeweilige Spulen der Wicklung angeordnet sind, wobei die Zähne zumindest bereichsweise mit dem Schutzmaterial umspritzt sind. Der Stator kann eine Mehrzahl von Zähnen aufweisen, die entlang einer Umfangsrichtung des Stators nebeneinander angeordnet sind. Zwischen den Zähnen können entsprechenden Nuten angeordnet sein. Die Wicklung der elektrischen Maschine kann aus isolierten Drähten bzw. lackierten Drähten gebildet sein und eine Mehrzahl von Spulen aufweisen. Die Spulen beschreiben den Teil der Wicklung, welcher an den jeweiligen Zähnen angeordnet ist. Dabei ist es insbesondere vorgesehen, dass die Zähne zumindest bereichsweise mit dem Schutzmaterial umspritzt sind. Insbesondere ist es vorgesehen, dass die Zähne vollständig mit dem Schutzmaterial umspritzt sind. Dabei ist es insbesondere vorgesehen, dass das Schutzmaterial elektrisch isolierend ausgebildet ist. Somit kann eine zuverlässige elektrische Isolierung zwischen der Wicklung bzw. den Spulen und den jeweiligen Zähnen bereitgestellt werden. Somit kann beispielsweise auf entsprechende Isolierelemente oder eine Papierisolation verzichtet werden, die zwischen den Spulen und den Zähnen eingebracht wird.

Gemäß einer weiteren Ausführungsform ist die Wicklung und der Statorkörper vollständig mit dem Schutzmaterial umspritzt. Dabei kann es vorgesehen sein, dass die jeweiligen Spulen gegebenenfalls zusammen mit dem Spulenkörper einzeln umspritzt sind. Es kann auch eine Umspritzung vorgesehen sein, die sich über die komplette Wicklung und den Statorkörper erstreckt. Auf diese Weise kann die im Betrieb der elektrischen Maschine entstehende Wärme zuverlässig von dem Stator abgeführt werden. Beispielsweise können die Konvektion an der Oberfläche und das zu erwärmende Volumen der Umspritzung dafür sorgen, dass die Wärme aus der elektrischen Maschine bzw. dem Stator ausgeleitet wird. Durch das Umspritzen des Stators kann die Oberfläche und auch das Volumen bzw. die Masse vergrößert werden oder die Oberfläche so ausgestaltet werden, dass die Wärme an der Oberfläche mittels Konvektion transportiert werden kann. Zudem kann eine verbesserte Wärmeverteilung an der Oberfläche, die durch die Umspritzung geschaffen wird, ermöglicht werden.

Durch die verbesserte Wärmeabfuhr, die durch die Umspritzung mit dem Schutzmaterial ermöglicht wird, kann beispielsweise eine elektrische Maschine bereitgestellt werden, die im Vergleich zu bekannten elektrischen Maschinen einen reduzierten Bauraum aufweist. Dies eignet sich insbesondere, wenn die elektrische Maschine in Haushaltsgeräten und insbesondere in Pumpen für Haushaltsgeräten verwendet wird. Ferner kann die Strombelastung der Drähte, aus denen die Wicklung gebildet ist, reduziert werden. Somit kann beispielsweise der Drahtdurchmesser im Vergleich zu bekannten Durchmessern verringert werden und damit auch Kupfergewicht eingespart werden. Ferner wird es beispielsweise ermöglicht, dass anstelle von Kupferdrähten Drähte aus einem anderen Metall, beispielsweise Aluminium, verwendet werden. Somit können Kosten reduziert werden.

Gemäß einer weiteren Ausgestaltung bildet das Schutzmaterial zumindest einen Teil eines Gehäuses der elektrischen Maschine. Mit anderen Worten umgibt das Schutzmaterial, welches den Stator zumindest bereichsweise umgibt, das Gehäuse der elektrischen Maschine. Damit ist es nicht erforderlich, dass die elektrische Maschine in einem separaten Gehäuse angeordnet wird. Somit lassen sich Spulenabdeckungen für den Stator als Bauteil einsparen, die sonst einen mechanischen und/oder elektrischen Schutz gegenüber der Umwelt darstellen. Wenn die elektrische Maschine in einem separaten Gehäuse angeordnet wird, kann beispielsweise ein Wärmestau innerhalb der elektrischen Maschine auftreten, weil das Gehäuse die wärmebedingte Konvektion unterbindet. Die Umspritzung mit dem Schutzmaterial bringt zudem den Vorteil, dass die Geräuschentwicklung im Betrieb reduziert werden kann, denn somit wird der gesamte Stator gekapselt und deutlich kompakter sowie schwerer und lässt sich zum Beispiel nicht so leicht zu Vibrationen anregen.

Weiterhin ist es vorteilhaft, wenn die Wicklung mit einer Verbindungsleitung in einem Verbindungsbereich elektrisch verbunden ist und die Wicklung und/oder die Verbindungsleitung in dem Verbindungsbereich zumindest bereichsweise mit dem Schutzmaterial umspritzt sind. Die Wicklung kann im Verbindungsbereich mit der Verbindungsleitung, die beispielsweise als Draht ausgebildet ist, verbunden sein. Beispielsweise kann die Verbindungsleitung mit der Wicklung über eine Lötverbindung oder eine Steckverbindung in dem Verbindungsbereich verbunden sein. Dadurch ist es insbesondere vorgesehen, dass in dem Verbindungsbereich sowohl die Verbindungsleitung als auch ein Teil der Wicklung mit dem Schutzmaterial umspritzt sind. Insbesondere ist die Lötverbindung oder eine Steckverbindung vollständig mit dem Schutzmaterial umspritzt. Auf diese Weise kann dieser Verbindungsbereich zuverlässig elektrisch isoliert werden und vor Umwelteinflüssen, insbesondere Feuchtigkeit oder mechanischer Belastung, geschützt werden.

Des Weiteren ist es insbesondere vorgesehen, dass ein Bereich des Stators, welcher mit dem Schutzmaterial umspritzt ist, durch das Schutzmaterial feuchtigkeitsdicht bedeckt ist. Mit anderen Worten dichtet das Schutzmaterial den Stator bereichsweise hermetisch ab. Das Schutzmaterial ist insbesondere direkt auf zumindest einem Bereich des Stators, also des Statorkörpers, der Zähne, des Spulenträgers und/oder den Spulen, angeordnet. Das Schutzmaterial schützt diesen Bereich des Stators vor Feuchtigkeit aus der Umgebung. Somit kann unter anderem auch ein zuverlässiger Korrosionsschutz für den Stator bereitgestellt werden.

Gemäß einer weiteren Ausgestaltung ist das Schutzmaterial dazu ausgelegt, im Betrieb der elektrischen Maschine entstehende Wärme zu homogenisieren und dann von dem Stator abzuführen. Beispielsweise kann das Schutzmaterial eine vorbestimmte Wärmeleitfähigkeit und/oder eine vorbestimmte Wärmekapazität aufweisen. Somit kann eine bessere Wärmeverteilung in dem vorhandenen Bauraum ermöglicht werden. Des Weiteren kann die Wärmeenergie, welche im Betrieb der elektrischen Maschine entsteht, zuverlässig an die Luft in der Umgebung der elektrischen Maschine abgeleitet werden. Somit kann die Temperaturbelastung der elektrischen Maschine im Betrieb herabgesetzt werden und somit ein zuverlässiger Betrieb der elektrischen Maschine ermöglicht werden.

Weiterhin ist es vorteilhaft, wenn das Schutzmaterial Füllstoffe umfasst, welche im Vergleich zu den Fasern und/oder dem Harz eine höhere Wärmeleitfähigkeit und/oder eine höhere Wärmekapazität aufweisen. In das Material können entsprechende Füllstoffe ausgebildet sein, die aus einem Material mit einer verhältnismäßig hohen Wärmeleitfähigkeit und/oder verhältnismäßig hohen Wärmekapazität gebildet sind. Somit kann als Schutzmaterial ein Material bereitgestellt werden, welches im Vergleich zu einem bekannten Bulk Moulding Compound eine höhere Wärmeleitfähigkeit und/oder eine höhere Wärmekapazität aufweist. Dies ermöglicht eine zuverlässige Abfuhr der Wärmeenergie aus dem Stator im Betrieb der elektrischen Maschine.

Eine erfindungsgemäße Pumpe für ein Haushaltsgerät umfasst eine erfindungsgemäße elektrische Maschine. Beispielsweise kann die Pumpe in einer Waschmaschine zurFörderung von Waschlauge verwendet werden. In gleicher Weise kann die Pumpe beispielsweise in Geschirrspülmaschinen eingesetzt werden. Die erfindungsgemäße elektrische Maschine kann im Vergleich zu bekannten elektrischen Maschinen bauraumsparend ausgelegt werden. Zudem kann die elektrische Maschine mit dem teilweise oder vollständig umspritzten Stator einen zuverlässigen Betrieb garantieren.

Ein erfindungsgemäßes Haushaltsgerät umfasst eine erfindungsgemäße Pumpe. Das Haushaltsgerät kann als Haushaltsgerät zur Pflege von Wäschestücken und insbesondere als Waschmaschine ausgebildet sein.

Alternativ dazu kann das Haushaltsgerät als Geschirrspülmaschine ausgebildet sein.

Ein erfindungsgemäßes Verfahren dient zum Herstellen einer elektrischen Maschine, welche als Synchronmaschine ausgebildet ist. Hierbei wird ein Stator, welcher einen Statorkörper und eine Wicklung aufweist, bereitgestellt. Ferner wird der Stator zumindest bereichsweise mit einem Schutzmaterial umspritzt. Darüber hinaus wird ein Rotor, welcher zumindest einen Permanentmagneten aufweist, relativ drehbar zu dem Stator angeordnet. Des Weiteren wird die Wicklung des Stators mehrphasig ausgebildet. Dabei umfasst das Schutzmaterial Fasern und ein Harz.

Bevorzugt ist es vorgesehen, dass bei der Herstellung der elektrischen Maschine zunächst die Wicklung umspritzt wird und anschließend der Stator einschließlich der umspritzten Wicklung umspritzt wird. Beispielsweise kann in einem ersten Schritt die Wicklung zumindest bereichsweise mit dem Schutzmaterial umspritzt werden. Hierbei ist es erfindungsgemäß vorgesehen, dass die Spulen der Wicklung vollständig mit dem Schutzmaterial umspritzt werden. In einem zweiten Schritt kann dann der komplette Stator inklusive der umspritzten Wicklung bzw. inklusive der umspritzten Spulen umspritzt werden. Auf diese Weise können die Komponenten des Stators zuverlässig vor Korrosion oder vor Feuchtigkeit geschützt werden. Darüber hinaus kann die Wärme im Betrieb der elektrischen Maschine von dem Stator zuverlässig mit Hilfe des Schutzmaterials abgeführt werden. Zum Aufbringen des Schutzmaterials kann der Stator oder Teile davon in ein entsprechendes Werkzeug eingelegt werden und anschließend kann das Schutzmaterial mit Hilfe eines entsprechenden Spritzgusswerkzeugs aufgebracht bzw. in eine Spritzgussform eingebracht werden.

Die mit Bezug auf die erfindungsgemäße elektrische Maschine bevorzugten vorgestellten Ausführungsformen und deren Vorteile gelten entsprechend für die erfindungsgemäße Pumpe, das erfindungsgemäße Haushaltsgerät sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert. Dabei zeigen:
- Fig. 1.: eine schematische Darstellung eines Haushaltsgeräts zur Pflege von Wäschestücken gemäß einer Ausführungsform der vorliegenden Erfindung;
- Fig. 2.: einen Stator einer elektrischen Maschine des Haushaltsgeräts in einer Seitenansicht;
- Fig. 3.: einen Statorkörper des Stators, welcher bereichsweise mit einem Schutzmaterial umspritzt ist;
- Fig. 4.: einen Stator der elektrischen Maschine gemäß einer weiteren Ausführungsform, bei welchem der Stator vollständig mit dem Schutzmaterial umspritzt ist; und
- Fig. 5.: einen Stator gemäß einer weiteren Ausführungsform, welcher vollständig mit dem Schutzmaterial umspritzt ist.

In den Figuren werden gleiche und funktionsgleiche Elemente mit den gleichen Bezugszeichen versehen.

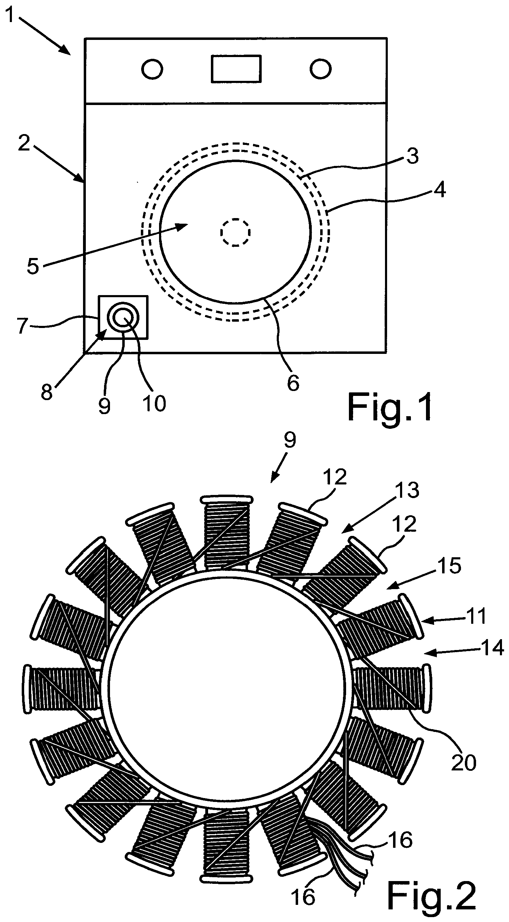

In Fig. 1 ist in einer vereinfachten Frontansicht ein Haushaltsgerät 1 zur Pflege von Wäschestücken, welches beispielsweise eine Waschmaschine oder ein Waschtrockner sein kann, dargestellt. Das Haushaltsgerät 1 umfasst ein Gehäuse 2, in welchem eine Wäschetrommel 3 drehbar gelagert ist. Eine Längsachse bzw. Drehachse der Wäschetrommel 3 ist bei dieser Ausführung in der Darstellung in Fig. 1 senkrecht zur Figurenebene orientiert. Das Haushaltsgerät 1 umfasst darüber hinaus einen Laugenbehälter 4, der ebenfalls im Gehäuse 2 angeordnet ist und die Wäschetrommel 3 umgibt. Die Wäschetrommel 3 umfasst einen hohlzylinderförmigen Mantel und eine rückseitige Stirnwand und ist darüber hinaus frontseitig offen ausgebildet, sodass hier eine Beschickungsöffnung vorgesehen ist, über welche Wäschestücke in ein Inneres 5 der Wäschetrommel 3 eingebracht werden können. Die Beschickungsöffnung ist durch eine Tür 6 verschließbar, die bewegbar, also zum Öffnen schwenkbar, an dem Gehäuse 2 angeordnet ist.

Darüber hinaus umfasst das Haushaltsgerät 1 eine Pumpe 7, welche vorliegend nur schematisch dargestellt ist. Die Pumpe 7 kann beispielsweise zur Förderung der Waschlauge eingesetzt werden. Die Pumpe 7 umfasst eine elektrische Maschine 8, welche wiederum einen Stator 9 und einen Rotor 10 umfasst, die vorliegend nur schematisch dargestellt sind. Die elektrische Maschine 8 ist als permanenterregte Synchronmaschine ausgebildet. Dabei weist der Rotor 10 eine Mehrzahl von Permanentmagneten auf.

Fig. 2 zeigt einen Stator 9 der elektrischen Maschine 8 in einer Seitenansicht. Der Stator 9 umfasst einen Statorkörper 11, der beispielsweise durch ein laminiertes Blechpaket gebildet sein kann. Dieser Statorkörper 11 umfasst wiederum eine Mehrzahl von Zähnen 12 und dazwischenliegende Nuten 13. Dabei sind die Zähne 12 entlang der Umfangsrichtung des Stators 9 nebeneinander angeordnet. Die Zähne erstrecken sich entlang einer radialen Richtung der elektrischen Maschine 8 bzw. des Stators 9. Darüber hinaus umfasst der Stator 9 eine Wicklung 14, welche wiederum mehrere Spulen 15 umfasst. Dabei sind die Spulen 15 der Wicklung 14 auf die Zähne 12 aufgebracht. Die Wicklung 14 bzw. die Spulen 15 sind aus Drähten 20 gebildet, welche beispielsweise aus Kupfer, Aluminium oder aus einer Kombination von beiden Werkstoffen gebildet sein können. Beispielsweise können die Drähte 20 aus einem kupferkaschierten Aluminium (CCA-wire) gebildet sein. Die Drähte 20 sind zudem elektrisch isoliert. Zu diesem Zweck kann beispielsweise eine elektrisch isolierende Lackschicht auf die Drähte 20 aufgebracht sein.

Die Wicklung 14 des Stators 9 ist mehrphasigen ausgebildet. In dem vorliegenden Ausführungsbeispiel ist die Wicklung 14 des Stators 9 dreiphasig ausgebildet. Mit Hilfe der Wicklung 14 bzw. mit Hilfe der Spulen 15 kann ein magnetisches Drehfeld bereitgestellt werden, welches den vorliegend nicht dargestellten Rotor 10 antreibt. Darüber hinaus umfasst die elektrische Maschine 8 bzw. der Stator 9 zumindest eine Verbindungsleitung 16, die elektrisch mit der Wicklung 14 bzw. mit den Spulen 15 verbunden ist. Die Verbindungsleitung 16 kann beispielsweise durch einen Draht bereitgestellt werden. Vorliegend umfasst der Stator 9 drei Verbindungsleitung 16, wobei jeweils eine Verbindungsleitung 16 mit einer Phase der Wicklung 14 verbunden ist.

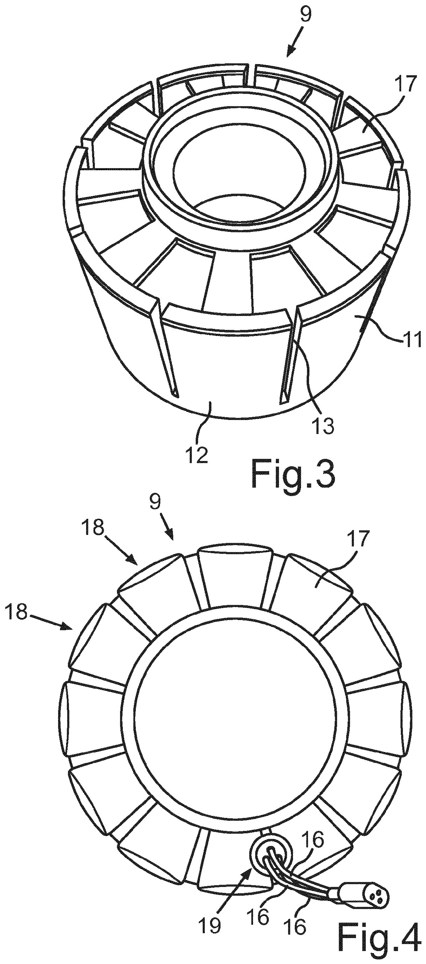

Der Stator 9 soll nun zumindest bereichsweise mit einem Schutzmaterial 17 umspritzt werden. Eine erste Ausführungsform eines Stators 9, welcher zumindest teilweise mit dem Schutzmaterial 17 umspritzt ist, ist in Fig. 3 dargestellt. Hier ist der Statorkörper 11 in einer perspektivischen Ansicht gezeigt. Hierbei ist zu erkennen, dass das Schutzmaterial 17 bereichsweise an den Zähnen 12 angeordnet ist. Ferner kann das Schutzmaterial 17 im Bereich der Nuten 13 angeordnet sein. Bei dem Schutzmaterial kann es sich um einen Verbundwerkstoff handeln, der beispielsweise aus einem Polyesterharz oder einem Vinylharz besteht, in welches Glasfasern eingebracht sind. Das Schutzmaterial 17 kann mit Hilfe eines entsprechenden Spritzgussverfahrens auf den Statorkörper 11 aufgebracht werden. Das Schutzmaterial 17 ist insbesondere als elektrischer Isolator ausgebildet. Vorliegend ist das Schutzmaterial 17 zumindest bereichsweise auf den Zähnen 12 und insbesondere an den Bereichen der Zähne 12 angeordnet, an welchen die jeweilige Spule 15 angeordnet wird. Somit kann die Spule 15 gegenüber dem Zahn 12 bzw. dem Statorkörper 11 elektrisch isoliert werden. Ferner dient das Schutzmaterial 17 dazu, die im Betrieb der elektrischen Maschine 8 entstehende Wärme nach außen abzuführen.

Fig. 4 zeigt einen Stator 9 gemäß einer weiteren Ausführungsform. Hierbei ist zu erkennen, dass die einzelnen Spulen 15 mit dem Schutzmaterial 17 umgeben sind. Das Schutzmaterial bildet also Bereiche 18 aus, die die jeweiligen Spulen 15 umgeben. In diesem Fall dient das Schutzmaterial 17 zusätzlich als Korrosionsschutz für die Spulen 15 bzw. die Wicklung 14. Mit anderen Worten werden die Spulen 15 durch das Schutzmaterial 17 primär vor Feuchtigkeit von außen und sekundär gegen mechanische Belastungen geschützt. Somit können elektrische Kurzschlüsse zwischen einzelnen Drähten 20 der Spule oder zwischen den Drähten 20 und den Zähnen 12 verhindert werden. Darüber hinaus dient das Schutzmaterial 17 dazu, die im Betrieb der elektrischen Maschine 8 entstehende Wärme zu homogenisieren und von dem Stator 9 nach außen abzuführen. An der Oberfläche des Schutzmaterials 17 kann die Wärme dann durch Konvektion abgeführt werden.

Darüber hinaus ist ein Verbindungsbereich 19, an welchem die Wicklung 14 mit den Verbindungsleitungen 16 elektrisch verbunden ist, mit dem Schutzmaterial 17 umspritzt. Somit kann auch dieser Verbindungsbereich 19 zuverlässig vor mechanischer Belastung, anderen Umwelteinflüssen, Feuchtigkeit und Korrosion geschützt werden.

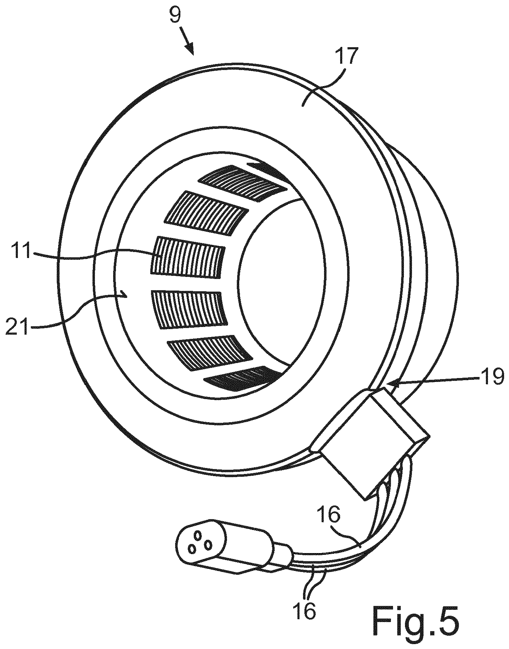

Fig. 5 zeigt einen Stator 9 gemäß einer weiteren Ausführungsform. Hierbei sind sowohl die einzelnen Spulen 15 vollständig mit dem Schutzmaterial 17 umspritzt. Der Statorkörper 11 ist bereichsweise umspritzt. An einer Innenseite 21 des Stators 9 ist der Statorkörper 11 bzw. das laminierte Blechpaket nicht umspritzt. Bei der Herstellung des Stators gemäß Fig. 5 können beispielsweise in einem ersten Schritt die Spulen 15 mit dem Schutzmaterial 17 umspritzt werden und anschließend kann der Statorkörper 11 einschließlich der umspritzten Spulen 15 zumindest bereichsweise mit dem Schutzmaterial 17 umspritzt werden. Vorliegend weist das Schutzmaterial 17 eine glatte Oberfläche auf. Dadurch kann die im Betrieb der elektrischen Maschine 8 entstehende Wärme von dem Stator 9 besonders effizient abgeführt werden. Zudem können die einzelnen Komponenten des Stators 9 vor Feuchtigkeit, Korrosion und/oder mechanischer Belastung geschützt werden. Somit ist es beispielsweise möglich, auf ein zusätzliches Gehäuse zu verzichten, in welchem der Stator 9 bzw. die elektrische Maschine 8 angeordnet wird.

### Bezugszeichenliste

- 1: Haushaltsgerät
- 2: Gehäuse
- 3: Wäschetrommel
- 4: Laugenbehälter
- 5: Inneres
- 6: Tür
- 7: Pumpe
- 8: elektrische Maschine
- 9: Stator
- 10: Rotor
- 11: Statorkörper
- 12: Zahn
- 13: Nut
- 14: Wicklung
- 15: Spule
- 16: Verbindungsleitung
- 17: Schutzmaterial
- 18: Bereich
- 19: Verbindungsbereich
- 20: Draht
- 21: Innenseite

## Patentansprüche

1. Elektrische Maschine (8) für ein Haushaltsgerät (1), wobei die elektrische Maschine (8) als Synchronmaschine ausgebildet ist, mit einem Stator (9), welcher einen Statorkörper (11) und eine Wicklung (14) aufweist, wobei der Stator (9) zumindest bereichsweise mit einem Harz umfassenden Schutzmaterial (17) umspritzt ist, und mit einem Rotor (10), welcher relativ zu dem Stator (9) drehbar ist und welcher zumindest einen Permanentmagneten aufweist, wobei die Wicklung (14) des Stators (9) mehrphasig ausgebildet ist, wobei das Schutzmaterial (17) Fasern umfasst, wobei Spulen (15) der Wicklung (14) jeweils auf einem elektrisch isolierenden Spulenträger angeordnet sind, **dadurch gekennzeichnet, dass** die jeweiligen Spulen (15) vollständig mit dem Schutzmaterial (17) umspritzt sind und der Spulenträger anschließend zusammen mit den Spulen (15) umspritzt ist.

2. Elektrische Maschine (8) nach Anspruch 1, **dadurch gekennzeichnet, dass** der Statorkörper (11) eine Mehrzahl von Zähnen (12) aufweist, an welchen jeweilige Spulen (15) der Wicklung (14) angeordnet sind, wobei die Zähne (12) zumindest bereichsweise mit dem Schutzmaterial (17) umspritzt sind.

3. Elektrische Maschine (8) nach einem der vorhergehenden Ansprüche, **dadurch gekennzeichnet, dass** die Wicklung (14) und der Statorkörper (11) vollständig mit dem Schutzmaterial (17) umspritzt sind.

4. Elektrische Maschine (8) nach einem der vorhergehenden Ansprüche, **dadurch gekennzeichnet, dass** das Schutzmaterial (17) zumindest einen Teil eines Gehäuses der elektrischen Maschine (8) bildet.

5. Elektrische Maschine (8) nach einem der vorhergehenden Ansprüche, **dadurch gekennzeichnet, dass** die Wicklung (14) mit einer Verbindungsleitung (16) in einem Verbindungsbereich (19) elektrisch verbunden ist und die Wicklung (15) und/oder die Verbindungsleitung (16) in dem Verbindungsbereich (19) zumindest bereichsweise mit dem Schutzmaterial (17) umspritzt sind.

6. Elektrische Maschine (8) nach einem der vorhergehenden Ansprüche, **dadurch gekennzeichnet, dass** ein Bereich des Stators (9), welcher mit dem Schutzmaterial (17) umspritzt ist, durch das Schutzmaterial (17) feuchtigkeitsdicht bedeckt ist.

7. Elektrische Maschine (8) nach einem der vorhergehenden Ansprüche, **dadurch gekennzeichnet, dass** das Schutzmaterial (17) dazu ausgelegt ist, im Betrieb der elektrischen Maschine (8) entstehende Wärme zu homogenisieren und von dem Stator (9) abzuführen.

8. Elektrische Maschine (8) nach einem der vorhergehenden Ansprüche, **dadurch gekennzeichnet, dass** das Schutzmaterial (17) Glasfasern und/oder ein Polyesterharz und/oder ein Vinylharz umfasst.

9. Elektrische Maschine (8) nach einem der vorhergehenden Ansprüche, **dadurch gekennzeichnet, dass** das Schutzmaterial (17) Füllstoffe umfasst, welche im Vergleich zu den Fasern und/oder dem Harz eine höhere Wärmeleitfähigkeit und/oder eine höhere Wärmekapazität aufweisen.

10. Pumpe (7) für ein Haushaltsgerät (1) mit einer elektrischen Maschine (8) nach einem der vorhergehenden Ansprüche.

11. Haushaltsgerät (1) mit einer Pumpe (7) nach Anspruch 10.

12. Verfahren zum Herstellen einer elektrischen Maschine (8), wobei die elektrische Maschine als Synchronmaschine ausgebildet ist, bei welchem ein Stator (9), welcher einen Statorkörper (11) und eine Wicklung (14) aufweist, bereitgestellt wird, der Stator (9) zumindest bereichsweise mit einem Harz umfassenden Schutzmaterial (17) umspritzt wird und ein Rotor (10), welcher zumindest einen Permanentmagneten aufweist, relativ drehbar zu dem Stator (9) angeordnet wird, wobei die Wicklung (14) des Stators (9) mehrphasig ausgebildet wird, wobei das Schutzmaterial (17) Fasern umfasst, wobei Spulen (15) der Wicklung (14) jeweils auf einem elektrisch isolierenden Spulenträger angeordnet werden, **dadurch gekennzeichnet, dass** die jeweiligen Spulen (15) mit dem Schutzmaterial (17) vollständig umspritzt werden und anschließend der Spulenträger zusammen mit den Spulen (15) umspritzt wird.

13. Verfahren nach Anspruch 12, **dadurch gekennzeichnet, dass** zunächst die Wicklung (14) umspritzt wird und anschließend der Stator (9) einschließlich der umspritzten Wicklung (14) umspritzt wird.

## Claims

1. Electric machine (8) for a household appliance (1), wherein the electric machine (8) is embodied as a synchronous machine, having a stator (9), which has a stator body (11) and a winding (14), wherein the stator (9) is extrusion-coated at least in regions with a protective material (17) comprising resin, and having a rotor (10), which can be rotated relative to the stator (9) and which has at least one permanent magnet, wherein the winding (14) of the stator (9) is embodied to be multiphase, wherein the protective material (17) comprises fibres, wherein coils (15) of the winding (14) are arranged in each case on an electrically insulating coil carrier, **characterised in that** the respective coils (15) are completely extrusion-coated with the protective material (17) and the coil carrier is then extrusion-coated together with the coils (15).

2. Electric machine (8) according to claim 1, **characterised in that** the stator body (11) has a plurality of teeth (12), on which respective coils (15) of the winding (14) are arranged, wherein the teeth (12) are extrusion-coated at least in regions with the protective material (17).

3. Electric machine (8) according to one of the preceding claims, **characterised in that** the winding (14) and the stator body (11) are completely extrusion-coated with the protective material (17).

4. Electric machine (8) according to one of the preceding claims, **characterised in that** the protective material (17) forms at least one part of a housing of the electric machine (8).

5. Electric machine (8) according to one of the preceding claims, **characterised in that** the winding (14) is electrically connected to a connecting line (16) in a connection region (19) and the winding (15) and/or the connecting line (16) are extrusion-coated at least in regions with the protective material (17) in the connecting region (19).

6. Electric machine (8) according to one of the preceding claims, **characterised in that** a region of the stator (9), which is extrusion-coated with the protective material (17), is covered in a moisture-proof manner by the protective material (17).

7. Electric machine (8) according to one of the preceding claims, **characterised in that** the protective material (17) is designed to homogenise heat produced during operation of the electric machine (8) and to dissipate the same from the stator (9).

8. Electric machine (8) according to one of the preceding claims, **characterised in that** the protective material (17) comprises glass fibres and/or a polyester resin and/or a vinyl resin.

9. Electric machine (8) according to one of the preceding claims, **characterised in that** the protective material (17) comprises filling materials which, compared with the fibres and/or the resin, have a higher thermal conductivity and/or a higher thermal capacitance.

10. Pump (7) for a household appliance (1) with an electric machine (8) according to one of the preceding claims.

11. Household appliance (1) with a pump (7) according to claim 10.

12. Method for producing an electric machine (8), wherein the electric machine is embodied as a synchronous machine, in which a stator (9), which has a stator body (11) and a winding (14), is provided, the stator (9) is extrusion-coated at least in regions with a protective material (17) comprising resin and a rotor (10), which has at least one permanent magnet, is arranged so as to be rotatable relative to the stator (9), wherein the winding (14) of the stator (9) is embodied to be multiphase, wherein the protective material (17) comprises fibres, wherein coils (15) of the winding (14) are arranged in each case on an electrically insulating coil carrier, **characterised in that** the respective coils (15) are completely extrusion-coated with the protective material (17) and the coil carrier is then extrusion-coated together with the coils (15).

13. Method according to claim 12, **characterised in that** the winding (14) is firstly extrusion-coated and the stator (9) including the extrusion-coated winding (14) is then extrusion-coated.

## Revendications

1. Machine électrique (8) pour un appareil ménager (1), la machine électrique (8) étant conçue comme une machine synchrone, avec un stator (9), lequel présente un corps de stator (11) et un enroulement (14), dans laquelle le stator (9) est surmoulé au moins par endroits avec un matériau protecteur (17) comprenant de la résine, et avec un rotor (10), lequel est rotatif par rapport au stator (9) et lequel présente au moins un aimant permanent, dans laquelle l'enroulement (14) du stator (9) est conçu polyphasé, dans laquelle le matériau protecteur (17) comprend des fibres, dans laquelle des bobines (15) de l'enroulement (14) sont disposées à chaque fois sur un porte-bobines électriquement isolant, **caractérisée en ce que** les bobines respectives (15) sont intégralement surmoulées avec le matériau protecteur (17) et le porte-bobines est ensuite surmoulé conjointement avec les bobines (15).

2. Machine électrique (8) selon la revendication 1, **caractérisée en ce que** le corps de stator (11) présente une pluralité de dents (12) sur lesquelles sont disposées des bobines respectives (15) de l'enroulement (14), dans laquelle les dents (12) sont surmoulées au moins par endroits avec le matériau protecteur (17).

3. Machine électrique (8) selon l'une des revendications précédentes, **caractérisée en ce que** l'enroulement (14) et le corps de stator (11) sont intégralement surmoulées avec le matériau protecteur (17).

4. Machine électrique (8) selon l'une des revendications précédentes, **caractérisée en ce que** le matériau protecteur (17) forme au moins une partie d'un corps de la machine électrique (8).

5. Machine électrique (8) selon l'une des revendications précédentes, **caractérisée en ce que** l'enroulement (14) est relié électriquement à une ligne de liaison (16) dans une zone de liaison (19) et l'enroulement (15) et/ou la ligne de liaison (16) dans la zone de liaison (19) sont surmoulés au moins par endroits avec le matériau protecteur (17).

6. Machine électrique (8) selon l'une des revendications précédentes, **caractérisée en ce qu'**une zone du stator (9), laquelle est surmoulée avec le matériau protecteur (17), est couverte par le matériau protecteur (17) d'une manière étanche à l'humidité.

7. Machine électrique (8) selon l'une des revendications précédentes, **caractérisée en ce que** le matériau protecteur (17) est prévu pour homogénéiser et évacuer du stator (9) de la chaleur générée lors du fonctionnement de la machine électrique (8).

8. Machine électrique (8) selon l'une des revendications précédentes, **caractérisée en ce que** le matériau protecteur (17) comprend des fibres de verre et/ou une résine polyester et/ou une résine vinylique.

9. Machine électrique (8) selon l'une des revendications précédentes, **caractérisée en ce que** le matériau protecteur (17) comprend des matières de remplissage, lesquelles présentent en comparaison aux fibres et/ou à la résine une conductivité thermique supérieure et/ou une capacité thermique supérieure.

10. Pompe (7) pour un appareil ménager (1) avec une machine électrique (8) selon l'une des revendications précédentes.

11. Appareil ménager (1) avec une pompe (7) selon la revendication 10.

12. Procédé de fabrication d'une machine électrique (8), dans lequel la machine électrique est conçue comme une machine synchrone, dans lequel un stator (9) est mis à disposition, lequel présente un corps de stator (11) et un enroulement (14), le stator (9) est surmoulé au moins par endroits avec un matériau protecteur (17) comprenant de la résine et un rotor (10), lequel présente au moins un aimant permanent, est disposé d'une manière relativement rotative par rapport au stator (9), dans lequel l'enroulement (14) du stator (9) est conçu polyphasé, dans lequel le matériau protecteur (17) comprend des fibres, dans lequel des bobines (15) de l'enroulement (14) sont disposées à chaque fois sur un porte-bobines électriquement isolant, **caractérisé en ce que** les bobines respectives (15) sont intégralement surmoulées avec le matériau protecteur (17) et ensuite le porte-bobines est surmoulé conjointement avec les bobines (15).

13. Procédé selon la revendication 12, **caractérisé en ce que** l'enroulement (14) est d'abord surmoulé et ensuite le stator (9) est surmoulé y compris l'enroulement surmoulé (14).
